# EUROPÄISCHE PATENTSCHRIFT

(11) **EP 3 140 813 B1**
(45) Veröffentlichungstag und Bekanntmachung des Hinweises auf die Patenterteilung: **10.07.2019**
(21) Anmeldenummer: 15733612.4
(22) Anmeldetag: 06.05.2015
(51) Int. Cl.: G06T 9/00, B60R 1/00, G06T 15/20, H04N 5/232, H04N 5/247

(54) **VERFAHREN UND VORRICHTUNG ZUM VERZERRUNGSFREIEN ANZEIGEN EINER FAHRZEUGUMGEBUNG EINES FAHRZEUGES**
METHOD AND DEVICE FOR THE DISTORTION-FREE DISPLAY OF AN AREA SURROUNDING A VEHICLE
PROCÉDÉ ET DISPOSITIF D'AFFICHAGE SANS DISTORSION D'UN ENVIRONNEMENT D'UN VÉHICULE

(30) Priorität: 08.05.2014 DE 102014208664
(43) Veröffentlichungstag der Anmeldung: 15.03.2017
(73) Patentinhaber: Conti Temic Microelectronic GmbH, 90411 Nürnberg (DE)
(72) Erfinder: FRIEBE, Markus, 95482 Gefrees (DE); PETZOLD, Johannes, 95326 Kulmbach (DE)
(86) Internationale Anmeldenummer: PCT/DE2015/200301
(87) Internationale Veröffentlichungsnummer: WO 2015/169316

(56) Entgegenhaltungen:
- WO-A1-2011/029694
- WO-A1-2011/029694
- DE-A1-102011 084 554
- DE-A1-102012 018 325
- JP-A- 2002 019 556
- JP-A- 2002 019 556
- US-A1- 2012 300 075
- US-A1- 2012 300 075

## Beschreibung

Die Erfindung betrifft ein Verfahren und eine Vorrichtung zum verzerrungsfreien Anzeigen einer Fahrzeugumgebung eines Fahrzeuges, insbesondere eines Straßenfahrzeuges, welches über ein Kamera-Surround-View-System verfügt.

Die Druckschrift US 2012/300075 A1 offenbart ein Anzeigesystem für Bilddaten in einem Fahrzeug. Die Bilddaten können auf eine vorgegebene dreidimensionale gewölbte Oberfläche projiziert und anschließend angezeigt werden.

Die Druckschrift WO 2011/029694 A1 betrifft eine Darstellung von Hindernissen für eine Einparkhilfe von Kraftfahrzeugen. Hierbei können Kanten von detektierten Objekten hervorgehoben werden. Dabei werden neben den erfassten Bilddaten auch mittels zusätzlicher Sensoren Objekte im Bildbereich detektiert. Für diese detektierten Objekte im Bildbereich wird daraufhin ein Verfahren zur Verstärkung der Kanten diese Objekte in den Bilddaten angewandt.

Die Druckschrift JP 2002-019 556 A beschreibt ein Surround-View-System für ein Kraftfahrzeug.

Fahrzeuge werden zunehmend mit Fahrerassistenzsystemen ausgerüstet, welche den Fahrer bei der Durchführung von Fahrmanövern unterstützen. Diese Fahrerassistenzsysteme enthalten zum Teil Kamera-Surround-View-Systeme, die es erlauben, die Fahrzeugumgebung des Fahrzeuges dem Fahrer des Fahrzeuges anzuzeigen. Derartige Kamera-Surround-View-Systeme umfassen eine oder mehrere Fahrzeugkameras, welche Kamerabilder liefern, die durch eine Datenverarbeitungseinheit des Kamera-Surround-View-Systems zu einem Umgebungsbild der Fahrzeugumgebung zusammengefügt werden. Das Bild der Fahrzeugumgebung wird dabei auf einer Anzeigeeinheit angezeigt. Herkömmliche kamerabasierte Fahrerassistenzsysteme projizieren Texturinformationen des Kamerasystems auf einer statischen Projektionsfläche, beispielsweise auf einer statischen zweidimensionalen Grundfläche oder auf einer statischen dreidimensionalen Schalenfläche.

Derartige Systeme haben jedoch den gravierenden Nachteil, dass Objekte der Fahrzeugumgebung stark verzerrt angezeigt werden, da die Textur-Re-Projektionsfläche statisch ist und deshalb nicht der realen Umgebung des Kamerasystems entspricht bzw. dieser ähnlich ist. Dadurch können stark verzerrte Objekte angezeigt werden, die störende Artefakte bilden.

Es ist daher eine Aufgabe der vorliegenden Erfindung, eine Vorrichtung und ein Verfahren zum verzerrungsfreien Anzeigen einer Fahrzeugumgebung eines Fahrzeuges zu schaffen, welches die Darstellung derartiger verzerrter Artefakte unterbindet. Diese Aufgabe wird erfindungsgemäß durch ein Kamera-Surround-View-System mit den in Patentanspruch 1 angegebenen Merkmalen gelöst.

Die Erfindung schafft demnach gemäß einem ersten Aspekt ein Kamera-Surround-View-System für ein Fahrzeug, wobei das Kamera-Surround-View-System mindestens eine Fahrzeugkamera aufweist, die Kamerabilder liefert, welche durch eine Datenverarbeitungseinheit zur Erzeugung eines Surround-View-Bildes bzw. eines Umgebungsbildes verarbeitet werden, das auf einer Anzeigeeinheit angezeigt wird, wobei die Datenverarbeitungseinheit Texturen, die von den Fahrzeugkameras erfasst werden, auf einer adaptiven der Fahrzeugumgebung ähnlichen Re-Projektionsfläche re-projiziert, die auf Basis von durch Fahrzeugsensoren des Fahrzeuges bereitgestellten Sensordaten, die Bewegungsdaten umfassen, berechnet wird.

Bei einer möglichen Ausführungsform des erfindungsgemäßen Kamera-Surround-View-Systems stellen die von den Fahrzeugsensoren bereitgestellten Sensordaten die Fahrzeugumgebung des Fahrzeuges genau dar.

Bei einer weiteren möglichen Ausführungsform des erfindungsgemäßen Kamera-Surround-View-Systems umfassen die Sensordaten auch Parkabstandsdaten, Radardaten, Lidardaten, Kameradaten und Laserscandaten.

Bei dem erfindungsgemäßen Kamera-Surround-View-Systems weist die adaptive Re-Projektionsfläche ein dynamisch veränderbares Gitter auf.

Bei einer weiteren möglichen Ausführungsform des erfindungsgemäßen Kamera-Surround-View-Systems ist das Gitter der Re-Projektionsfläche in Abhängigkeit der bereitgestellten Sensordaten dynamisch veränderbar.

Bei einer weiteren möglichen Ausführungsform des erfindungsgemäßen Kamera-Surround-View-Systems ist das Gitter der Re-Projektionsfläche ein dreidimensionales Gitter.

Die Erfindung schafft ferner ein Fahrerassistenzsystem mit den in Patentanspruch 6 angegebenen Merkmalen.

Die Erfindung schafft ferner ein Verfahren zum verzerrungsfreien Anzeigen einer Fahrzeugumgebung eines Fahrzeuges mit den in Patentanspruch 7 angegebenen Merkmalen.

Weitere mögliche Ausführungsformen des erfindungsgemäßen Verfahrens sind in den Unteransprüchen angegeben.

Im Weiteren werden mögliche Ausführungsformen der erfindungsgemäßen Vorrichtung und des erfindungsgemäßen Verfahrens zur verzerrungsfreien Anzeige einer Fahrzeugumgebung eines Fahrzeuges unter Bezugnahme auf die beigefügten Figuren näher erläutert.

Es zeigen:
- Figur 1: ein Blockschaltbild zur Darstellung eines Ausführungsbeispiels eines erfindungsgemäßen KameraSurround-View-Systems;
- Figur 2: ein Ablaufdiagramm zur Darstellung eines Ausführungsbeispiels des erfindungsgemäßen Verfahrens zum verzerrungsfreien Anzeigen einer Fahrzeugumgebung eines Fahrzeuges;
- Figur 3: eine bevorzugte Ausführung der Erfindung.

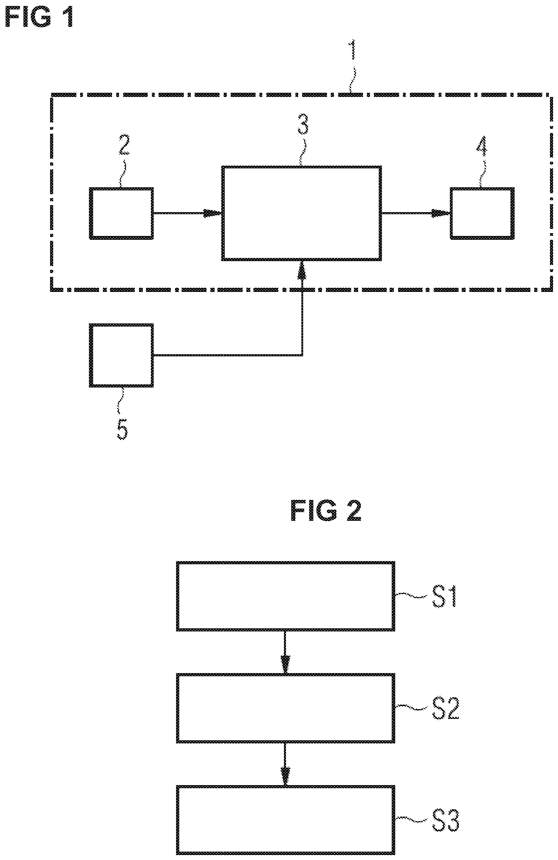

Wie man in Figur 1 erkennen kann, weist das Kamera-Surround-View-System 1 bei dem dargestellten Beispiel mehrere Komponenten auf. Das Kamera-Surround-View-System 1 weist bei dem dargestellten Ausführungsbeispiel mindestens eine Fahrzeugkamera 2 auf, die Kamerabilder liefert, welche durch eine Datenverarbeitungseinheit 3 des Kamera-Surround-View-Systems 1 zu einem Surround-View-Bild bzw. einem Umgebungsbild des Fahrzeuges verarbeitet werden. Die von der Datenverarbeitungseinheit 3 erzeugten Surround-View-Bilder bzw. Fahrzeugumgebungsbilder werden auf einer Anzeigeeinheit 4 angezeigt. Die Datenverarbeitungseinheit 3 berechnet auf Basis von Sensordaten, die von Fahrzeugsensoren 5 des Fahrzeuges bereitgestellt werden, eine adaptive Re-Projektionsfläche. Texturen, die von den Fahrzeugkameras 2 des Kamera-Surround-View-Systems 1 erfasst werden, werden auf dieser berechneten adaptiven der Fahrzeugumgebung ähnlichen Re-Projektionsfläche re-projiziert, wodurch Verzerrungen bzw. verzerrte Artefakte minimiert bzw. eliminiert werden.

Bei den in Figur 1 dargestellten Sensoren 5 handelt es sich beispielsweise um Sensoren einer Parkabstandssteuerung bzw. Parkabstandsregelung. Weiterhin kann es sich bei den Sensoren des Fahrzeuges um Radarsensoren, Lidarsensoren handeln. Bei einer weiteren möglichen Ausführungsform werden die Sensordaten von weiteren Fahrzeugkameras 2, insbesondere einer Stereokamera oder einer Monokamera, zur Berechnung der adaptiven Re-Projektionsfläche geliefert. Bei einer weiteren möglichen Ausführungsform werden die Sensordaten durch ein Laserscansystem des Fahrzeuges bereitgestellt. Bei der erfindungsgemäßen Ausführungsform werden auch Bewegungsdaten oder Strukturdaten zur Berechnung der Re-Projektionsfläche durch die Datenverarbeitungseinheit 3 herangezogen. Die von den Fahrzeugsensoren 5 bereitgestellten Sensordaten geben mit einer hohen Genauigkeit die Fahrzeugumgebung bzw. Objekte in der Fahrzeugumgebung wieder. Bei diesen Objekten handelt es sich beispielsweise um andere Fahrzeuge, die sich in der unmittelbaren Umgebung des Fahrzeuges, beispielsweise in einem Umkreis von bis zu fünf Metern, befinden. Weiterhin kann es sich bei diesen Objekten auch um Passanten handeln, die an dem Fahrzeug in unmittelbarer Nähe in einem Abstand von bis zu fünf Metern vorbeigehen.

Die von der Datenverarbeitungseinheit 3 auf Basis der Sensordaten berechnete Re-Projektionsfläche weist vorzugsweise ein dynamisch veränderbares Gitter bzw. Mesh auf. Dieses Gitter der Re-Projektionsfläche wird bei einer möglichen Ausführungsform in Abhängigkeit der bereitgestellten Sensordaten dynamisch verändert. Das Gitter der Re-Projektionsfläche ist vorzugsweise ein dreidimensionales Gitter.

Bei dem dreidimensionalen Gitter handelt es sich vorzugsweise um ein gitterbasiertes Umfeldmodell, das zur Repräsentation des Fahrzeugumfelds dient. Ein gitterbasiertes Umfeldmodell basiert darauf, das Umfeld eines Fahrzeuges in Zellen zu unterteilen und für jede Zelle ein das Umfeld beschreibendes Merkmal zu speichern. Bei einem sogenannten Belegungsgitter wird beispielsweise für jede Zelle eine Klassifikation in "befahrbar" und "belegt" gespeichert ist. Neben der Befahrbarkeit kann auch eine Klassifikation anhand anderer Merkmale gespeichert werden, z.B. eine reflektierte Radar-Energie. Neben der guten Komprimierbarkeit ist ein Vorteil eines solchen Gitters der hohe Abstraktionsgrad, der auch eine Fusion verschiedenartiger Sensoren, wie z.B. Stereokamera, Radar, Lidar oder Ultraschall ermöglicht. Zusätzlich oder alternativ zur Klassifikation der Zellen in "befahrbar" und "belegt" kann für die einzelnen Gitterzellen als Merkmal auch ein Höhenwert gespeichert werden, insbesondere für "belegte Zellen", welche Hindernisse bzw. Objekte repräsentieren. Die Höheninformation lässt sich mit geringem zusätzlichen Ressourcenverbrauch speichern und ermöglicht eine effiziente Speicherung und Übertragung des Umfeldmodells. Insbesondere durch vorangehend beschriebene Zuordnung von Höheninformationen zu den jeweiligen Gitterzellen eines Belegungsgitters entsteht somit eine dreidimensionale Belegungskarte des Fahrzeugumfelds, welche im Rahmen der vorliegenden Erfindung vorteilhaft genutzt werden kann. Die dreidimensionale Belegungskarte kann dabei als adaptive Re-Projektionsfläche genutzt werden, auf der die Texturen, die von den Fahrzeugkameras erfasst werden, re-projiziert werden. Bevorzugt werden dabei die Texturen direkt auf die dreidimensionale Belegungskarte bzw. auf die dreidimensionalen Gitterzellen projiziert.

Die durch die Datenverarbeitungseinheit 3 berechnete Re-Projektionsfläche ist nicht statisch, sondern dynamisch und adaptiv anpassbar an die momentanen Sensordaten, welche von den Fahrzeugsensoren 5 geliefert werden. Diese Fahrzeugsensoren 5 können bei einer möglichen Ausführungsform eine Monofrontkamera oder eine Stereokamera umfassen. Weiterhin können die Sensoreinheiten 5 ein Lidarsystem aufweisen, das Daten liefert oder ein Radarsystem, welches Radardaten der Umgebung an die Datenverarbeitungseinheit 3 überträgt. Die Datenverarbeitungseinheit 3 kann einen oder mehrere Mikroprozessoren enthalten, welche die Sensordaten verarbeitet und daraus eine Re-Projektionsfläche in Echtzeit berechnet. Texturen, die von den Fahrzeugkameras 2 erfasst werden, werden auf diese berechnete der Fahrzeugumgebung ähnliche Re-Projektionsfläche projiziert bzw. re-projiziert. Die Anzeige der Fahrzeugkameras 2 kann variieren. Bei einer möglichen Ausführungsform verfügt das Fahrzeug über vier Fahrzeugkameras 2 an vier unterschiedlichen Seiten des Fahrzeuges. Bei dem Fahrzeug handelt es sich vorzugsweise um ein Straßenfahrzeug, insbesondere einen Lkw oder einen Pkw. Mit dem erfindungsgemäßen Kamera-Surround-View-System 1 werden die durch die Kamera 2 des Kamerasystems erfassten Texturen der Umgebung durch die adaptive Re-Projektionsfläche re-projiziert, um die oben genannten Artefakte zu reduzieren bzw. zu beseitigen. Durch das erfindungsgemäße Kamera-Surround-View-System 1 wird somit die Qualität der dargestellten Fahrzeugumgebung stark verbessert. Objekte in der Fahrzeugumgebung, beispielsweise andere in der Nähe geparkten Fahrzeuge oder in der Nähe befindliche Personen, erscheinen weniger verzerrt als bei Systemen, die eine statische Re-Projektionsoberfläche verwenden.

Figur 2 zeigt ein Ablaufdiagramm zur Darstellung einer Ausführungsform des erfindungsgemäßen Verfahrens zum verzerrungsfreien Anzeigen einer Fahrzeugumgebung eines Fahrzeuges.

In einem ersten Schritt S1 werden Kamerabilder der Fahrzeugumgebung durch Fahrzeugkameras 2 des Fahrzeuges erzeugt. Beispielsweise werden die Kamerabilder durch mehrere Fahrzeugkameras 2 erzeugt, die an verschiedenen Seiten des Fahrzeuges angebracht sind.

Die erzeugten Kamerabilder werden anschließend im Schritt S2 verarbeitet, um ein Umgebungsbild der Fahrzeugumgebung zu generieren. Bei einer möglichen Ausführungsform erfolgt die Verarbeitung der erzeugten Kamerabilder durch eine Datenverarbeitungseinheit 3, wie sie in Figur 1 dargestellt ist. Die Kamerabilder werden vorzugsweise in Echtzeit verarbeitet, um ein entsprechendes Umgebungsbild zu generieren.

In einem weiteren Schritt S3 wird zunächst auf Basis von bereitgestellten Sensordaten eine Re-Projektionsfläche berechnet und anschließend Texturen, die von den Fahrzeugkameras erfasst werden, auf dieser adaptiven berechneten Re-Projektionsfläche re-projiziert. Die adaptive Re-Projektionsfläche weist ein dynamisch veränderbares Gitter auf, das in Abhängigkeit der bereitgestellten Sensordaten dynamisch verändert wird. Dieses Gitter ist vorzugsweise ein dreidimensionales Gitter. Das in Figur 2 dargestellte Verfahren kann bei einer möglichen Ausführungsform durch ein Computerprogramm implementiert sein, welches Computerbefehle enthält, die durch einen Mikroprozessor ausgeführt werden können. Dieses Programm wird bei einer möglichen Ausführungsform auf einem Daten-Träger oder in einem Programmspeicher gespeichert.

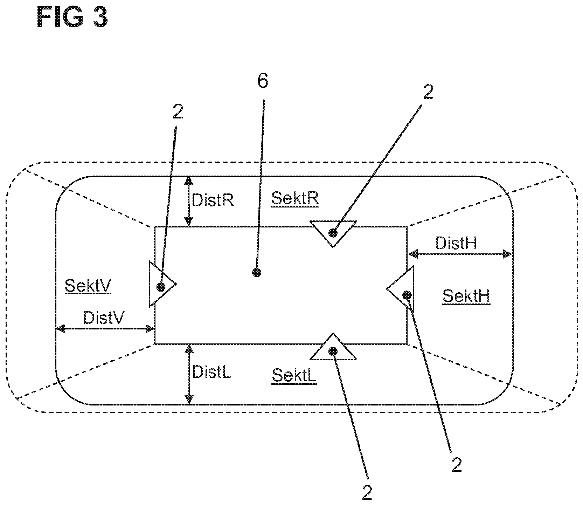

Figur 3 zeigt eine bevorzugte Ausführungsform der vorliegenden Erfindung. Gemäß der Darstellung handelt es sich bei der adaptiven Re-Projektionsfläche um ein dynamisch veränderbares Gitter. Das Gitter besteht dabei aus 4 Sektoren, nämlich aus den Sektoren "Sektor Links" (SektL), "Sektor Rechts" (SektR), "Sektor Vorne" (SektV) und "Sektor Hinten" (SektH). Jeder dieser Sektoren kann individuell in der Rückprojektionsdistanz verändert werden. Hierzu gibt es 4 Parameter, nämlich "Abstand Links" (DistL), "Abstand Rechts" (DistR), "Abstand Hinten" (DistH) und "Abstand Vorne" (DistV). Jeder Sektor kann hiermit individuell an Abstände von Objekten bzw. Hindernissen zum Fahrzeug (6) eingestellt werden. Ein Beispiel dazu ist in Figur 3 dargestellt, mit einer Sektor-weisen bzw. Sektor-bezogenen Veränderung des dynamischen Gitters von einem definierten Ausgangsabstand (durchgezogene Linie) zu mittels Sensoren gemessenen Objektabständen (gestrichelte Linie) .

## Patentansprüche

1. Kamera-Surround-View-System (1) für ein Fahrzeug (6) mit mindestens einer Fahrzeugkamera (2), die Kamerabilder liefert, welche durch eine Datenverarbeitungseinheit (3) zur Erzeugung eines Umgebungsbildes verarbeitet werden, das auf einer Anzeigeeinheit (4) angezeigt wird, wobei die Datenverarbeitungseinheit (3) Texturen, die von den Fahrzeugkameras (2) erfasst werden, auf einer adaptiven der Fahrzeugumgebung ähnlichen Re-Projektionsfläche re-projiziert, die auf Basis von durch Fahrzeugsensoren (5) bereitgestellten Sensordaten, die Bewegungsdaten umfassen, berechnet wird, wobei die berechnete adaptive Re-Projektionsfläche ein dynamisch veränderbares Gitter aufweist.

2. Kamera-Surround-View-System nach Anspruch 1,
wobei die von den Fahrzeugsensoren (5) bereitgestellten Sensordaten die Fahrzeugumgebung des Fahrzeuges (6) wiedergeben.

3. Kamera-Surround-View-System nach Anspruch 2,
wobei die Sensordaten zusätzlich zu den Bewegungsdaten Parkabstandsdaten, Radardaten, Lidardaten, Kameradaten und Laserscandaten aufweisen.

4. Kamera-Surround-View-System nach einem der vorangehenden Ansprüche,
wobei das Gitter der Re-Projektionsfläche in Abhängigkeit der bereitgestellten Sensordaten dynamisch veränderbar ist.

5. Kamera-Surround-View-System nach einem der vorangehenden Ansprüche,
wobei das Gitter der Re-Projektionsfläche ein dreidimensionales Gitter ist.

6. Fahrerassistenzsystem für ein Fahrzeug (6) mit einem Kamera-Surround-View-System (1) nach einem der vorangehenden Ansprüche 1 bis 5.

7. Verfahren zum verzerrungsfreien Anzeigen einer Fahrzeugumgebung eines Fahrzeuges (6) mit den Schritten:
(a) Erzeugen (S1) von Kamerabildern der Fahrzeugumgebung durch Fahrzeugkameras (2) des Fahrzeuges (6); und
(b) Verarbeiten (S2) der erzeugten Kamerabilder zur Generierung eines Umgebungsbildes der Fahrzeugumgebung; und
(c) Re-projizieren (S3) von Texturen, die von den Fahrzeugkameras (2) erfasst werden, auf einer adaptiven der Fahrzeugumgebung ähnlichen Re-Projektionsfläche, die auf Basis von durch Fahrzeugsensoren (5) bereitgestellten Sensordaten, die Bewegungsdaten umfassen, berechnet wird,
wobei die adaptive Re-Projektionsfläche ein dynamisch veränderbares Gitter aufweist.

8. Verfahren nach Anspruch 7,
wobei die von den Fahrzeugsensoren (5) bereitgestellten Sensordaten die Fahrzeugumgebung des Fahrzeuges (6) darstellen.

9. Verfahren nach Anspruch 8, wobei die Sensordaten zusätzlich zu den Bewegungsdaten Parkabstandsdaten, Radardaten, Lidardaten, Kameradaten und Laserscandaten umfassen.

10. Verfahren nach einem der Ansprüche 7 bis 9,
wobei das Gitter der Re-Projektionsfläche in Abhängigkeit der bereitgestellten Sensordaten dynamisch verändert wird.

11. Verfahren nach einem der Ansprüche 7 bis 10,
wobei das Gitter der Re-Projektionsfläche ein dreidimensionales Gitter aufweist.

12. Computerprogramm mit Befehlen, welche das Verfahren nach einem der vorangehenden Ansprüche 7 bis 11 ausführt.

13. Fahrzeug (6), insbesondere Straßenfahrzeug, mit einem Fahrerassistenzsystem nach Anspruch 6.

## Claims

1. A camera surround view system (1) for a vehicle (6), having at least one vehicle camera (2) which supplies camera images which are processed by a data processing unit (3) in order to generate an image of the surroundings, which is displayed on a display unit (4), wherein the data processing unit (3) re-projects textures detected by the vehicle cameras (2) on an adaptive re-projection surface which is similar to the area surrounding the vehicle, said re-projection surface being calculated based on sensor data, comprising movement data, provided by vehicle sensors (5), wherein the calculated adaptive re-projection surface comprises a grid which can be dynamically modified.

2. The camera surround view system according to Claim 1,
wherein the sensor data provided by the vehicle sensors (5) reproduces the area surrounding the vehicle (6).

3. The camera surround view system according to Claim 2,
wherein the sensor data comprises parking distance data, radar data, LIDAR data, camera data and laser scan data in addition to the movement data.

4. The camera surround view system according to any one of the preceding claims, wherein the grid of the re-projection surface can be dynamically modified as a function of the sensor data provided.

5. The camera surround view system according to any one of the preceding claims, wherein the grid of the re-projection surface is a three-dimensional grid.

6. A driver assistance system for a vehicle (6) having a camera surround view system (1) according to any one of the preceding Claims 1 to 5.

7. A method for the distortion-free display of an area surrounding a vehicle (6), having the steps of:
(a) generating (S1) camera images of the area surrounding the vehicle by cameras (2) of the vehicle (6); and
(b) processing (S2) the generated camera images in order to generate an image of the surroundings of the vehicle; and
(c) re-projecting (S3) textures detected by the vehicle cameras (2) on an adaptive re-projection surface (2) similar to the area surrounding the vehicle, said re-projection surface being calculated based on sensor data, comprising movement data, provided by vehicle sensors (5), wherein the adaptive re-projection surface comprises a grid which can be dynamically modified.

8. The method according to Claim 7,
wherein the sensor data provided by the vehicle sensors (5) shows the area surrounding the vehicle (6).

9. The method according to Claim 8, wherein the sensor data comprises parking distance data, radar data, LIDAR data, camera data and laser scan data in addition to the movement data.

10. The method according to any one of Claims 7 to 9, wherein the grid of the re-projection surface is dynamically modified as a function of the sensor data provided.

11. The method according to any one of Claims 7 to 10, wherein the grid of the re-projection surface comprises a three-dimensional grid.

12. A computer program having commands, which executes the method according to any one of the preceding Claims 7 to 11.

13. A vehicle (6), in particular a road vehicle, having a driver assistance system according to Claim 6.

## Revendications

1. Système de vue panoramique de caméra (1) pour un véhicule (6) avec au moins une caméra de véhicule (2) qui fournit des images de caméra, lesquelles sont traitées par une unité de traitement de données (3), pour la génération d'une image d'environnement, laquelle est affichée sur une unité d'affichage (4), l'unité de traitement de données (3) reprojetant, sur une surface de reprojection adaptive semblable à l'environnement de véhicule, des textures qui sont détectées par la caméra de véhicule (2), laquelle surface est calculée sur la base de données de capteur mises à disposition par des capteurs de véhicule (5), lesquelles comprennent des données de mouvement, la surface de reprojection adaptative calculée présentant une grille pouvant être modifiée de façon dynamique.

2. Système de vue panoramique de caméra selon la revendication 1,
les données de capteur mises à disposition par les capteurs de véhicule (5) restituant l'environnement du véhicule (6).

3. Système de vue panoramique de caméra selon la revendication 2,
les données de capteur présentant, en plus des données de mouvement, des données de distance de stationnement, des données radar, des données lidar, des données de caméra et des données de balayage scanner.

4. Système de vue panoramique de caméra selon l'une des revendications précédentes,
la grille de la surface de reprojection pouvant être modifiée de façon dynamique en fonction des données de capteur mises à disposition.

5. Système de vue panoramique de caméra selon l'une des revendications précédentes,
la grille de la surface de reprojection étant une grille tridimensionnelle.

6. Système d'aide à la conduite pour un véhicule (6) avec un système de vue panoramique de caméra (1) selon l'une des revendications précédentes 1 à 5.

7. Procédé pour l'affichage sans distorsion d'un environnement de véhicule (6) avec les étapes :
(a) Génération (S1) d'images de caméra de l'environnement de véhicule par la caméra de véhicule (2) du véhicule (6) ; et
(b) Traitement (S2) des images de caméra générées pour la génération d'une image d'environnement du véhicule ; et
(c) Reprojection (S3) de textures, lesquelles sont détectées par la caméra de véhicule (2), sur une surface de reprojection adaptative semblable à l'environnement de véhicule, laquelle surface est calculée sur la base de données de capteur mises à disposition par des capteurs de véhicule (5), lesquelles comprennent des données de mouvement, la surface de reprojection adaptative présentant une grille pouvant être modifiée de façon dynamique.

8. Procédé selon la revendication 7,
les données de capteur mises à disposition par les capteurs de véhicule (5) représentant l'environnement du véhicule (6).

9. Procédé selon la revendication 8,
les données de capteur comprenant, en plus des données de déplacement, des données de distance de stationnement, des données radar, des données lidar, des données de caméra et des données de balayage scanner.

10. Procédé selon l'une des revendications 7 à 9,
la grille de la surface de reprojection pouvant être modifiée de façon dynamique en fonction des données de capteur mises à disposition.

11. Procédé selon l'une des revendications 7 à 10,
la grille de la surface de reprojection présentant une grille tridimensionnelle.

12. Programme d'ordinateur avec des commandes, lequel exécute le procédé selon l'une des revendications précédentes 7 à 11.

13. Véhicule (6), en particulier véhicule routier, avec un système d'aide à la conduite selon la revendication 6.
